Europäisches Patentamt

European Patent Office

Office européen des brevets

(11) Publication number: **0 065 041**
**B2**

(12) **NEW EUROPEAN PATENT SPECIFICATION**

(45) Date of publication of the new patent specification: **16.01.91**

(21) Application number: **81302130.0**

(22) Date of filing: **13.05.81**

(51) Int. Cl.⁵: **B 60 S 1/34**

(54) Parallel arm windscreen wiper with through-the-pane drive.

(43) Date of publication of application:
**24.11.82 Bulletin 82/47**

(45) Publication of the grant of the patent:
**06.03.85 Bulletin 85/10**

(45) Mention of the opposition decision:
**16.01.91 Bulletin 91/03**

(84) Designated Contracting States:
**AT DE FR GB IT SE**

(56) References cited:
**CH-A- 244 749**
**DE-A-2 250 509**
**DE-A-2 632 186**
**DE-C-1 031 660**
**DE-U-1 758 507**
**DE-U-7 426 221**
**FR-A-1 138 725**
**GB-A-1 234 040**
**US-A-3 893 204**

(73) Proprietor: **DEERE & COMPANY**
**1 John Deere Road**
**Moline, Illinois 61265 (US)**

(72) Inventor: **Hauk, Klaus**
**Berlinerstrasse 28**
**D-6701 Altrip (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a parallel arm windscreen wiper with through-the-pane drive, as set forth in the introductory part of claim 1. In such an arrangement, the wiper arm is ultimately supported and positioned by the motor fixed inside the vehicle. It is necessary to provide a fixed and correctly positioned pivot for the control arm. An arrangement in accordance with the precharacterizing part of claim 1 is known from CH—A 244 749. However in this known arrangement the pivot for the control arm passes through a second hole in the windscreen pane and the bracket is clamped against the windscreen pane by two nuts, one on the said pivot and one on a bush through which the drive spindle passes. This solution is unattractive because of the need to provide two holes through the glass or plastics pane and to provide seals for the two holes. This is expensive and creates a region of weakness in the pane.

It has been proposed to avoid this problem by mounting the control arm pivot independently outside the pane on a bracket which extends from the surrounding metal frame of the windscreen. It is then hardly possible to ensure a precise correlation between the positions of the drive spindle (mounted through the pane from the inside) and the control arm pivot (mounted from outside). Any variations in the relative positions of the spindle and pivot affect the orientation of the wiper blade and/or the end positions of its oscillatory sweep so that the desired swept area is not attained.

It is also known from GB—A—1,234,040 to fix a drive spindle sleeve through the metal frame of a windscreen by means of a first nut on the sleeve and to fix the bracket on the end of the sleeve by a second nut. This known arrangement is not suitable for mounting through the windscreen itself since it is not satisfactory to fix the sleeve to the glass by a clamping nut. Moreover, any distortion of the sleeve will cause the shaft to bind and in the known arrangement the torque to which the sleeve is subjected by the control arm can give rise to such distortion.

The object of this invention is to provide an improved construction which overcomes the problems discussed above and the invention is defined in claim 1. Advantageous developments are set forth in the dependent claims.

The invention will be described in more detail, by way of example, with reference to the accompanying drawings, in which:

Fig. 1 is a schematic elevation of a windscreen with windscreen wiper, as seen from inside the cab of a tractor,

Fig. 2 is a side elevation, partially in section showing the mounting of the windscreen wiper mechanism, and

Fig. 3 is a similar view to Fig. 2 but with the motor itself, the drive spindle and the wiper arm omitted.

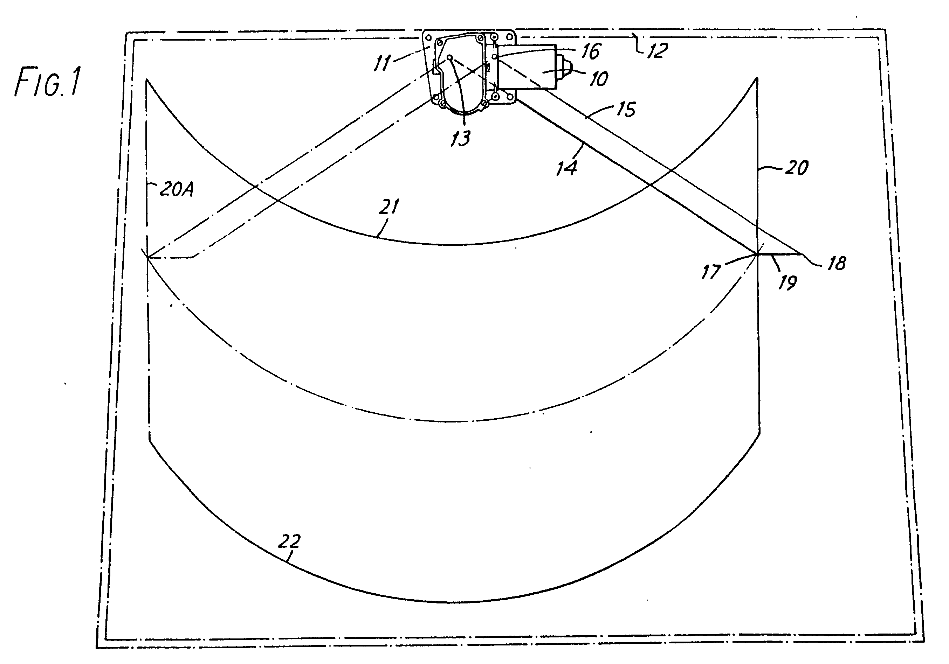

Referring firstly to Fig. 1, the motor 10 of the windscreen wiper is attached to a mounting plate 11 which is, in turn, mounted on the upper part of the frame 12 of the windscreen. The plate depends from the frame so that the axis 13 of the drive spindle for the wiper arm 14 extends through the windscreen pane. The upper end of a control arm 15 running parallel to the wiper arm 14 is pivoted at a fixed point 16 spaced somewhat from the drive spindle axis. The lower ends of the two arms are pivoted at 17 and 18 respectively to a blade support 19 carrying the wiper blade 20. These various parts are shown only schematically as their construction is known and without importance to the invention.

Because of the parallelogram formed by the arms 14 and 15 and the wiper support 19, the wiper blade 20 maintains a vertical orientation throughout the oscillatory sweep of the wiper arm 14. This provides a desirable shape to the cleaned area of the windscreen, defined at the sides by the limit positions 20 and 20A of the wiper blade and, at the top and the bottom, by the arcs 21 and 22 swept out by the tips of the blade.

The lengths of three sides of the parallelogram are determined by fixed dimensions of constructional elements themselves, namely the dimension 13—17 of the wiper arm 14, the dimension 16—18 of the control arm 15 and the dimension 17—18 of the wiper support 19. The length of the fourth side is the distance from the drive spindle axis 13 to the pivot point 16. This distance as well as the orientation of the fourth side of the parallelogram is determined by the positioning of the pivot point 16 relative to the axis 13 and, any deviations from the desired relative positions will alter detrimentally the form of the cleaned area 20, 20A, 21, 22.

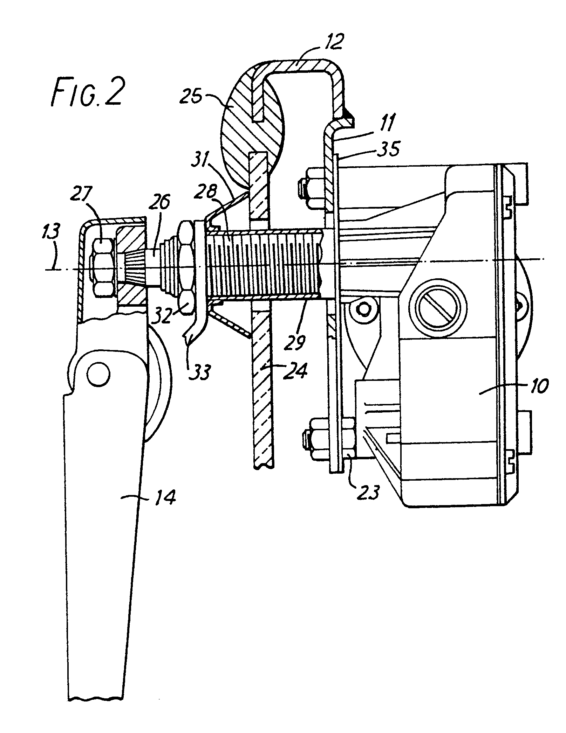

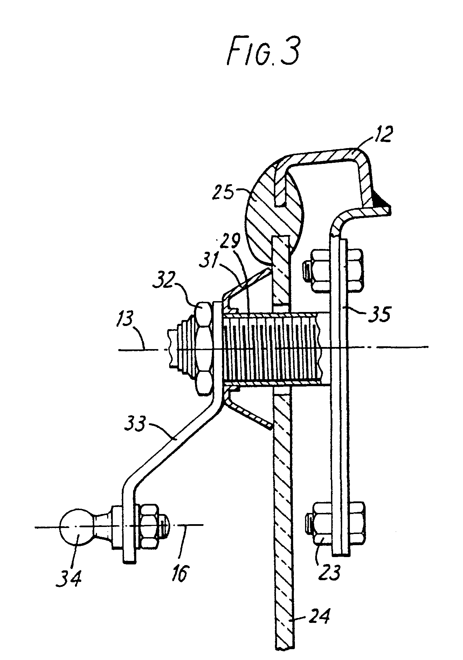

The construction illustrated in Figs. 2 and 3 enables the pivot point 16 to be fixed precisely relative to the axis 13. Fig. 2 again shows the motor 10 fixed on to its mounting plate 11 by nuts and bolts 23 and the top part of the frame 12 to which the plate 11 is attached. The frame 12 is of channel section and the windscreen pane 24 is sealed relative to the front flange of the channel section by a rubber sealing strip 25.

The drive spindle 26 of the motor has a splined end on which the wiper arm 14 is held by a nut 27. The spindle 26 extends through a sleeve 28, passing with clearance through a hole in the windscreen pane 24. The sleeve 28 is fixed relative to the motor 10 itself. The sleeve is in turn surrounded by a bush or spacer tube 29 and a resilient plastics skirt 31 attached to the outer end of the tube 29. The skirt bears against the pane and seals the hole through the windscreen pane. The outer end of the sleeve 28 projects through the tube 29 and is threaded to receive a nut 32 which clamps one end of a bracket 33 against the outer end of the spacer tube 29.

The bracket 33 is an outwardly cranked tongue, as can be seen from Fig. 3, and has attached to its outer end a pivot stud 34 establishing the pivot point 16 for the control arm 15, which has a known type of snap on bearing which engages the pivot stud 34.

The distance between the axes 13 and 16 is established exclusively by the dimensions of the bracket 33 and this is readily stamped with sufficient precision in relation to this dimension. Moreover the orientation of the line joining the axis 13 and 16 is fixed by fixing the orientation of the bracket 33 about the motor drive spindle axis 13. This is conveniently achieved by forming tongues on the ends of the spacer tube 29, which key into corresponding slots in the tongue 33 and the back plate 35 of the motor. The positioning of the stud 34 along its axis 16 is determined in part by the bracket 33 (namely the offset between its cranked parts) and in part by the length of the spacer tube 29.

## Claims

1. A parallel arm windscreen wiper with through-the-pane drive, comprising a wiper arm (14) attached to a drive spindle (26) extending through the windscreen pane (24), a parallel control arm (15) pivoted at one end (16) near the drive spindle on a bracket (33) fixed by a nut (32) relative to a sleeve (28) around the drive spindle and a blade support (19) pivoted to the distal ends (17, 18) of the two arms to form a parallelogram causing the blade (20) itself to assume a constant orientation throughout its oscillatory sweep, characterised in that the bracket (33) is clamped by the nut (32) against a spacer tube (29) which extends with clearance through a hole in the windscreen pane (24) around the sleeve (28) to the motor (10, 35), with the drive spindle (26), the sleeve (28), the spacer tube (29) and hence the bracket (33) supported solely by the motor (10).

2. A windscreen wiper according to claim 1, characterised in that the spacer tube (29) is keyed into the bracket (33) and a motor back plate (35) to fix the orientation of the bracket.

3. A windscreen wiper according to claim 1 or 2, characterised in that a resilient skirt (31) on the spacer tube (29) outside the windscreen pane (24) bears against the pane to seal the said hole through which the drive spindle (26) and spacer tube (29) extend.

## Patentansprüche

1. Scheibenwischer mit parallelen Armen und durch die Scheibe greifendem Antrieb, welcher einen Wischerarm (14) umfaßt, der an einer Antriebsspindel (26) befestigt ist, welche sich durch die Windschutzscheibe (24) erstreckt, ferner einen parallelen Steuerarm (15), der an einem Ende (16) nahe der Antriebsspindel an einem Halter (33) schwenkbar ist, welcher durch eine Mutter (32) gegenüber einer Hülse (28) um die Antriebsspindel festgelegt ist, und einen Wischblattstützteil (19) umfaßt, der an den abliegenden Enden (17, 18) der beiden Arme schwenkbar angebracht ist, um ein Parallelogramm zu bilden, welches veranlaßt, daß das Wischblatt (20) selbst eine konstante Orientierung über die gesamte oszilierende Wischbewegung annimmt, dadurch gekennzeichnet, daß der Halter (33) durch die Mutter (32) gegen ein Abstandsrohr (29) geklemmt ist, welches sich mit Spiel durch ein Loch in der Windschutzscheibe (24) um die Hülse (28) zu einem Motor (10, 35) erstreckt, wobei die Antriebsspindel (26), die Hülse (28) und das Abstandsrohr (29) und folglich auch der Halter nur durch den Motor (10) unterstützt sind.

2. Scheibenwischer nach Anspruch 1, dadurch gekennzeichnet, daß das Abstandsrohr (29) in den Halter (33) und eine Stützplatte (35) für den Motor eingekeilt ist, um die Orientierung des Halters zu fixieren.

3. Scheibenwischer nach Anspruch 1 oder 2, dadurch gekennzeichnet, daß eine nachgiebige Schürze (31) auf dem Abstandsrohr (29) außerhalb der Windschutzscheibe (24) gegen die Scheibe anliegt, um das Loch abzudichten, durch welches sich die Antriebsspindel (26) und das Abstandsrohr (29) erstrecken.

## Revendications

1. Essuie-glace à bras parallèles avec entraînement à travers le pare-brise, comportant un bras d'essuie-glace (14) fixé sur un axe d'entraînement (26) s'étendant à travers la vitre de pare-brise (24) à partir d'un moteur (10), un bras de commande parallèle (15) monté à pivotement à une extrémité (16), au voisinage de l'axe d'entraînement, sur une console (33) fixée par un écrou (32) par rapport à un manchon (28) entourant l'axe d'entraînement, et un support de balai (19) monté à pivotement aux extrémités opposées (17, 18) des deux bras pour former un parallélogramme grâce auquel le balai (20) lui-même conserve une orientation constante pendant la totalité de son mouvement de balayage oscillant, caractérisé en ce que la console (33) est serrée par l'écrou (32) contre un tube d'écartement (29) qui s'étend avec un certain jeu à travers un trou de la vitre de pare-brise (24) autour du manchon (28) jusqu'au moteur (10, 35), l'axe d'entraînement (26), le manchon (28), le tube d'écartement (29) et donc la console (33) étant supportés seulement par le moteur (10).

2. Essui-glace suivant la revendication 1, caractérisé en ce que le tube d'écartement (29) est claveté dans la console (33) et dans une plaque de montage arrière (35) du moteur, pour déterminer l'orientation de la console.

3. Essuie-glace suivant la revendication 1 ou 2, caractérisé en ce qu'une jupe élastique (31) prévue sur le tube d'écartement (29) à l'extérieur du pare-brise (24) vient porter contre la vitre de pare-brise pour assurer l'étanchéité du trou servant au passage de l'axe d'entraînement (26) et du tube d'écartement (29).

*FIG.1*

EP 0 065 041 B2

FIG.2

# FIG. 3